# EUROPEAN PATENT SPECIFICATION

(11) **EP 1 914 974 B1**
(45) Date of publication and mention of the grant of the patent: **06.07.2011**
(21) Application number: 06761485.9
(22) Date of filing: 19.07.2006
(51) Int. Cl.: H04M 15/00

(54) **METHOD FOR REAL-TIME DISPLAYING TELEPHONE-FEE AT THE TERMINAL**
VERFAHREN FÜR ECHTZEIT BILDANZEIGE VON GESPRÄCHSGEBÜHREN BEI DEM ENDGERÄT
PROCEDE D'AFFICHAGE EN TEMPS REEL DE TAXES DE TELEPHONE SUR LE TERMINAL

(30) Priority: 05.08.2005 CN 200510088380
(43) Date of publication of application: 23.04.2008
(73) Proprietor: Huawei Technologies Co., Ltd., Longgang District, Shenzhen Guangdong 518129 (CN)
(72) Inventor: LI, Mingyu, Guangdong 518129 (CN)
(74) Representative: Kreuz, Georg Maria
(86) International application number: PCT/CN2006/001750
(87) International publication number: WO 2007/016849

(56) References cited:
- WO-A-00/19700
- WO-A1-00/19700
- WO-A1-02/054672
- CN-A- 1 649 376
- CN-A- 1 649 376
- US-A1- 2004 122 684
- US-B1- 6 212 506

## Description

### Field of the Invention

The present invention relates to communication technologies, and particularly, to a system and a method for displaying cost information on a terminal device in real time.

### Background of the Invention

The function of displaying cost information on a terminal device enables the terminal device, when a calling user finishes a call, to show the cost information of the call on the display of the device. The function of displaying cost information in real time enables the terminal device to show the cost information of a call in real time in every charging period during the call. For example, if a charging period is 6 seconds and the charging rate is RMB0.01 / 6s, the terminal device will display the total cost information every 6 seconds during the call.

Two methods for displaying cost information in real time according to the prior art are described and analyzed as follows.

One of the methods includes: saving charging information such as the charging rate and the charging period in the terminal device; starting timing by the terminal device when a calling user begins the call; calculating the cost based on the saved charging rate each time the charging period expires; and displaying the cost information obtained through calculation.

It can be seen from the above technical solution that the charging process is performed entirely by the terminal device. The charging information such as the charging rate and the charging period is save in the terminal device, and may be easily manipulated. Therefore, the security of this method is of a relatively low level. Further, the accuracy of the charging process also depends on the terminal device, which results in frequent errors in the charging process. The rate information is configured on the terminal device, which requires complicated rate maintenance process and lacks flexibility.

The other method in the prior art includes: issuing the charging rate to the terminal device by the network when the calling user begins the call; starting timing by the terminal device at the same time; calculating the cost based on the received rate each time a charging period expires; and displaying the cost information obtained through calculation.

Document US 2004/0122684 discloses a method by which a user of a portable communication device subscribed to a telecommunication network is provided with an indication of the cost level of engaging a communication service available through telecommunication network.

Document US 6212506 B1 discloses per call real-time billing display. Repository of billing rate information is accessible to the communications system, which selects the appropriate billing rate based on call attributes such as time of day, geographic location, etc. The charge information may be periodically computed within a switch or data processing system within the communications system and transmitted to a remote display device for display.

The technical solution of the second method has the same problem as that of the first method, i.e., accuracy of the charging process depends on the terminal device, which results in frequent errors in the charging process. Furthermore, according to the technical solution of the second method, because the charging rate is issued to the terminal device only when the call begins, the terminal device may not be provided with flexible rates concerning the currently existing various preferential charging policies. So this method also lacks flexibility in practice.

### Summary of the Invention

The present invention provides a method for displaying cost information on a terminal device in real time so as to achieve accurate and flexible charging.

A method for displaying cost information on a terminal device in real time, includes:
determining, by a Service Control Point, SCP, in an intelligent network, cost information to be transmitted according to a cost information display protocol between the SCP and a terminal device, the cost information display protocol indicating that the cost information comprises a total cost within a period of time;
calculating, by the SCP, cost of a current call in real time during the current call, and calculating, by the SCP, the total cost within the period of time through adding the cost of the current call to a total cost of previous calls; wherein the cost comprises an expense on the current call and the total cost within the period of time comprises a total expense within the period of time; and issuing the cost information to a Service Switching Point, SSP, in the intelligent network in every charging period;
transmitting, by the SSP, the cost information to a terminal device; and
displaying the cost information by the terminal device in real time after receiving the cost information from the SSP.

An intelligent network includes:
a Service Control Point, SCP, configured to determine cost information to be transmitted according to a cost information display protocol between the SCP and a terminal device, wherein the cost information display protocol indicates that the cost information comprises a total cost within a period of time; calculate a cost for a current call in real time, and calculate the total cost within the period of time through adding the cost for the current call to a total cost of previous calls; wherein the cost comprises an expense on the current call and the total cost within the period of time comprises a total expense within the period of time, and issue the cost information in every charging period;
a Service Switching Point, SSP, configured to transmit the cost information received from the SCP; and
the terminal device, configured to display the cost information in real time after receiving the cost information from the SSP.

It can be seen from the technical solution of the present invention that the present invention enables the network to perform realtime charging for a call and to transmit the cost information to the terminal device, which will display the cost information after receiving the cost information, therefore the rate is totally under the control of the network, which guarantees the security of the charging process. In addition, according to the present invention, the network performs charging in a centralized manner, which eliminates errors from the terminal device and thus achieves accurate charging; furthermore, the rate is totally under the control of the network, and the rate may be adjusted flexibly based on the increase of the call duration, hence the present invention provides a flexible charging method.

### Brief Description of the Drawings

Figure 1 shows a network structure of an intelligent network;
Figure 2 is a flow chart according to an embodiment of the present invention.

### Detailed Description of the Invention

An embodiment of the present invention is described hereafter with reference to the accompanying drawings so that those skilled in the art can understand and implement the present invention.

The present invention provides a solution for displaying cost information on a terminal device in real time, which includes: charging by the network in real time for the call and transmitting the cost information to the terminal device; and displaying the cost information by the terminal device after receiving the cost information.

Charging for the call in real time by the network usually includes: counting the duration of the call and calculating in real time the cost for the call based on a corresponding rate and the duration of the call.

Display protocols may be configured, so that the terminal device may negotiate with the network to determine which display protocol is to be employed on demand. In this case, charging for the call in real time by the network includes: determining the cost information to be transmitted according to the display protocol determined by the network and the terminal device, and calculating in real time to generate the cost information to be transmitted.

If the determined display protocol prescribes that the cost information to be transmitted includes the cost for the present call only, the network counts the duration of the call and then calculates in real time the cost for the call based on a corresponding rate and the duration of the call, so that the cost information is generated.

If the determined display protocol prescribes that the cost information to be transmitted shall include not only the cost for the present call, but also the total cost within a period of time, a process of calculating the total cost within the period shall be added into the method. Calculating the total cost within the period includes: adding the total cost for previous calls within the period and the cost for the present call.

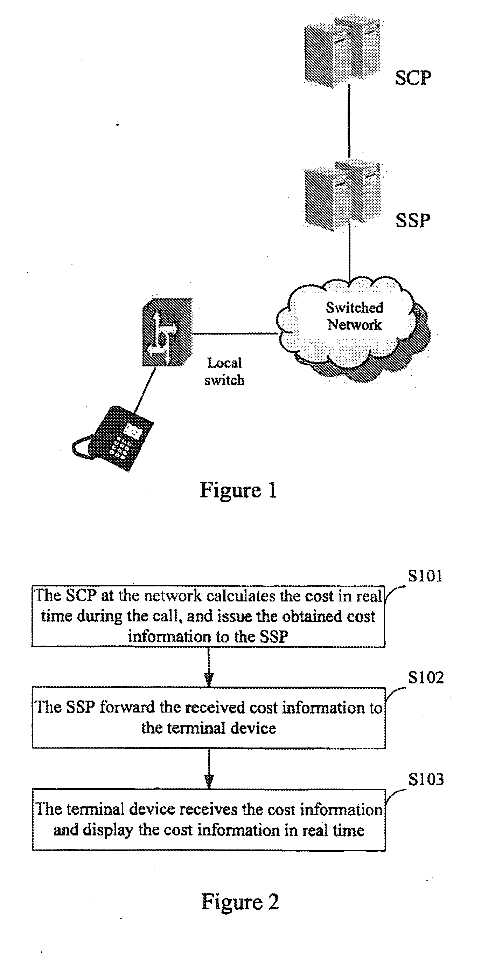

As explained in the above description, according to an embodiment of the present invention, the network generates and displays the cost securely, accurately and in real time. An embodiment of the present invention is applied to an intelligent network, which includes a Service Control Point (SCP), a Service Switching Point (SSP), a switched network, a local switch and a terminal device such as a telephone, as shown in Figure 1.

The call process is controlled by the intelligent network, so the SCP of the intelligent network, which serves as a cost calculating device, may perform a realtime calculation of the cost for the call and issue the cost information to the SSP periodically. The SSP, which serves as a cost information forwarding device, receives the cost information and forwards the cost information to the terminal device via the communication link. Periodically issuing the cost information from the SCP to the SSP includes that the SCP issues the cost information in every charging period. At present a charging period is usually 6 seconds, so the SCP may issue the cost information to the SSP every 6 seconds.

Figure 2 shows the work flow according to an embodiment of the present invention in the intelligent network, including:
Block S101: The SCP of the network calculates the cost for the call in real time and issues the cost information to the SSP.

In this block, the SCP of the network first counts the duration of the call and calculates the charge for the call in real time based on the corresponding rate and the call duration, and then issues the cost information to the SSP. Issuing the cost information from the SCP to the SSP during the call may be implemented by extending the interaction operations in accordance with the Intelligent Network Application Procedure (INAP), or be implemented by providing an internal private protocol, e.g., an extension of Play Announcement (PA). For example, a PA operation may be indicated to be a cost information issuing operation, and the cost information carried in the operation is transmitted to the SSP.

Further, the SCP and the terminal device may negotiate to determine a cost information display protocol, which prescribes to display the cost information including only the cost for the present call, or the cost information including both the cost of the present call and the total cost of the whole month. Therefore, in the process of calculating the cost for the call in real time, the SCP may determine the cost information to be transmitted according to the display protocol between the SCP and the terminal device before calculating the cost for the call.

Block S102: The SSP transmits the received cost information to the terminal device.

In this block, the cost information may be transmitted to the terminal device in the form of audio signal, i.e., the cost information is transmitted to the terminal device during the call according to audio coding approaches, e.g., Frequency Shift Keying (FSK) or Dual-Tone Multi-Frequency (DTMF). Such a transmission mode may produce audible sound, so the transmission duration of the cost information is limited to an extremely short period in order not to affect the communication quality, e.g., the cost information is transmitted in 50ms, which is negligible to human ears.

In accordance with an embodiment of the present invention, the transmission duration of the cost information may further be adjusted according to the employed audio coding approaches and the information volume of the cost information to be transmitted. For example, when the information volume is low, the transmission duration may further be shortened, e.g., to 30ms, to minimize the influence brought by the transmission of the cost information to the communication quality.

Block S103: the terminal device displays the cost information in real time after receiving the cost information.

It can be seen from the technical solution of the present invention that, the network performs realtime calculation of the cost for the call and transmits the cost information to the terminal device; the terminal device displays the cost information after receiving the cost information, therefore the rate is totally under the control of the network, which guarantees the security of the charging process. Further, according to an embodiment of the present invention, the network calculates the cost in a centralized manner, which eliminates errors resulting from the terminal device and thus achieves accuracy of the charging process. Furthermore, since the rate is totally under the control of the network, the rate may be adjusted flexibly by the network based on the call duration. The present invention provides considerable flexibility.

The foregoing is only preferred embodiments of this invention. The protection scope of this invention, however, is not limited to the above description. Any change or substitution, within the technical scope disclosed by this invention, easily occurring to those skilled in the art should be covered by the protection scope of this invention. Therefore, the protection scope of the present invention should be determined according to claims.

## Claims

1. A method for displaying cost information on a terminal device in real time, **characterized by** comprising:
determining, by a Service Control Point, SCP, in an intelligent network, cost information to be transmitted according to a cost information display protocol between the SCP and a terminal device, the cost information display protocol indicating that the cost information comprises a total cost within a period of time;
calculating (S101), by the SCP, cost of a current call in real time during the current call, and calculating, by the SCP, the total cost within the period of time through adding the cost of the current call to a total cost of previous calls; wherein the cost comprises an expense on the current call and the total cost within the period of time comprises a total expense within the period of time; and issuing (S101) the cost information to a Service Switching Point, SSP, in the intelligent network in every charging period;
transmitting (S102), by the SSP, the cost information to a terminal device; and
displaying (S103) the cost information by the terminal device in real time after receiving the cost information from the SSP.

2. The method of Claim 1, wherein the process of issuing (S101) the cost information to the SSP in the intelligent network in every charging period comprises:
issuing (S101) the cost information to the SSP in the intelligent network in every charging period by extending an interaction operation in accordance with an Intelligent Network Application Procedure, INAP, or by providing an internal private protocol.

3. The method of Claim 1 or 2, wherein the process of calculating the cost in real time comprises:
counting a duration of the current call and calculating in real time the cost for the current call based on a corresponding rate and the duration of the current call.

4. The method of Claim 1 or 2, wherein the SSP transmits the cost information to the terminal device according to an audio coding approach.

5. The method of Claim 4, wherein the process of transmitting by the SSP the cost information to the terminal device further comprises: transmitting the cost information to the terminal device in a predetermined transmission time.

6. The method of Claim 5, wherein the predetermined transmission time is configured based on the audio coding approach and the information volume of the cost information.

7. The method of Claim 4, wherein the audio coding approach comprises: Frequency Shift Keying FSK or Dual-Tone Multi-Frequency DTMF.

8. An intelligent network, comprising:
a Service Control Point, SCP, configured to determine cost information to be transmitted according to a cost information display protocol between the SCP and a terminal device, wherein the cost information display protocol indicates that the cost information comprises a total cost within a period of time; calculate a cost for a current call in real time, and calculate the total cost within the period of time through adding the cost for the current call to a total cost of previous calls; wherein the cost comprises an expense on the current call and the total cost within the period of time comprises a total expense within the period of time, and issue the cost information in every charging period;
a Service Switching Point, SSP, configured to transmit the cost information received from the SCP; and
the terminal device, configured to display the cost information in real time after receiving the cost information from the SSP.

9. The intelligent network of claim 8, wherein the SCP is configured to issue the cost information in every charging period by extending an interaction operation in accordance with an Intelligent Network Application Procedure, INAP, or by providing an internal private protocol.

## Patentansprüche

1. Verfahren zum Anzeigen von Kosteninformationen auf einem Endgerät in Echtzeit, **gekennzeichnet durch** die folgenden Schritte:
Bestimmen von Kosteninformationen **durch** einen Service Control Point SCP in einem intelligenten Netz, die gemäß einem Kosteninformations-Anzeigeprotokoll zwischen dem SCP und einem Endgerät zu übertragen sind, wobei das Kosteninformations-Anzeigeprotokoll angibt, dass die Kosteninformationen Gesamtkosten innerhalb eines Zeitraums umfassen;
Berechnen (S101) von Kosten eines derzeitigen Anrufs **durch** den SCP in Echtzeit während des derzeitigen Anrufs und Berechnen der Gesamtkosten innerhalb des Zeitraums **durch** den SCP **durch** Addieren der Kosten des derzeitigen Anrufs zu Gesamtkosten vorheriger Anrufe; wobei die Kosten Ausgaben an dem derzeitigen Anruf umfassen und die Gesamtkosten innerhalb des Zeitraums Gesamtausgaben innerhalb des Zeitraums umfassen; und Ausgeben (S101) der Kosteninformationen an einen Service Switching Point SSP in dem intelligenten Netz in jeder Vergebührungsperiode;
Senden (S102) der Kosteninformationen **durch** den SSP zu einem Endgerät; und
Anzeigen (S103) der Kosteninformationen **durch** das Endgerät in Echtzeit nach dem Empfang der Kosteninformationen von dem SSP.

2. Verfahren nach Anspruch 1, wobei der Prozess des Ausgebens (S101) der Kosteninformationen an den SSP in dem intelligenten Netz in jeder Vergebührungsperiode Folgendes umfasst:
Ausgeben (S101) der Kosteninformationen an den SSP in dem intelligenten Netz in jeder Vergebührungsperiode durch Erweitern einer Interaktionsoperation gemäß einer Intelligent Network Application Procedure INAP oder durch Bereitstellen eines internen privaten Protokolls.

3. Verfahren nach Anspruch 1 oder 2, wobei der Prozess des Berechnens der Kosten in Echtzeit Folgendes umfasst:
Zählen einer Dauer des derzeitigen Anrufs und Berechnen der Kosten für den derzeitigen Anruf in Echtzeit auf der Basis eines entsprechenden Tarifs und der Dauer des derzeitigen Anrufs.

4. Verfahren nach Anspruch 1 oder 2, wobei der SSP die Kosteninformationen gemäß einem Audiocodierungsansatz zu dem Endgerät sendet.

5. Verfahren nach Anspruch 4, wobei der Prozess des Sendens der Kosteninformationen durch den SSP zu dem Endgerät ferner Folgendes umfasst: Senden der Kosteninformationen zu dem Endgerät in einer vorbestimmten Sendezeit.

6. Verfahren nach Anspruch 5, wobei die vorbestimmte Sendezeit auf der Basis des Audiocodierungsansatzes und des Informationsvolumens der Kosteninformationen konfiguriert wird.

7. Verfahren nach Anspruch 4, wobei der Audiocodierungsansatz Folgendes umfasst: Frequency Shift Keyring FSK oder Dual-Tone Multi-Frequency DTMF.

8. Intelligentes Netz, umfassend:
einen Service Control Point SCP, der dafür ausgelegt ist, Kosteninformationen zu bestimmen, die gemäß einem Kosteninformations-Anzeigeprotokoll zwischen dem SCP und einem Endgerät zu senden sind, wobei das Kosteninformations-Anzeigeprotokoll angibt, dass die Kosteninformationen Gesamtkosten innerhalb eines Zeitraums umfassen; Kosten für einen derzeitigen Anruf in Echtzeit zu berechnen und die Gesamtkosten in dem Zeitraum durch Addieren der Kosten für den derzeitigen Anruf zu Gesamtkosten vorheriger Anrufe zu berechnen; wobei die Kosten Ausgaben an dem derzeitigen Anruf umfassen und die Gesamtkosten innerhalb des Zeitraums Gesamtausgaben innerhalb des Zeitraums umfassen, und die Kosteninformationen in jeder Vergebührungsperiode auszugeben;
einen Service Switching Point SSP, der dafür ausgelegt ist, die von dem SCP empfangenen Kosteninformationen zu senden; und
das Endgerät, das dafür ausgelegt ist, die Kosteninformationen nach dem Empfang der Kosteninformationen von dem SSP in Echtzeit anzuzeigen.

9. Intelligentes Netz nach Anspruch 8, wobei der SCP dafür ausgelegt ist, die Kosteninformationen in jeder Vergebührungsperiode durch Erweitern einer Interaktionsoperation gemäß einer Intelligent Network Application Procedure INAP oder durch Bereitstellen eines internen privaten Protokolls auszugeben.

## Revendications

1. Procédé d'affichage en temps réel d'informations de coût sur un dispositif terminal, **caractérisé en ce qu'**il comprend :
la détermination, par un Point de Commande de Service, SCP, dans un réseau intelligent, d'informations de coût à transmettre en fonction d'un protocole d'affichage d'informations de coût entre le SCP et un dispositif terminal, le protocole d'affichage d'informations de coût indiquant que les informations de coût comprennent un coût total dans une période de temps ;
le calcul (S101), par le SCP, en temps réel du coût d'un appel en cours durant l'appel en cours, et le calcul, par le SCP, du coût total dans la période de temps en ajoutant le coût de l'appel en cours à un coût total d'appels antérieurs; le coût comprenant une dépense relative à l'appel en cours et le coût total dans la période de temps comprenant une dépense totale dans la période de temps; et la communication (S101) des informations de coût à un Point de Commutation de Service, SSP, dans le réseau intelligent dans chaque période de facturation;
la transmission (S102), par le SSP, des informations de coût à un dispositif terminal; et
l'affichage (S103) en temps réel des informations de coût par le dispositif terminal après la réception des informations de coût depuis le SSP.

2. Procédé selon la revendication 1, dans lequel le processus de communication (S101) des informations de coût au SSP dans le réseau intelligent dans chaque période de facturation comprend :
la communication (S101) des informations de coût au SSP dans le réseau intelligent dans chaque période de facturation en élargissant une opération d'interaction conformément à une Procédure d'Application de Réseau Intelligent, INAP, ou en fournissant un protocole privé interne.

3. Procédé selon la revendication 1 ou 2, dans lequel le processus de calcul du coût en temps réel comprend :
le comptage d'une durée de l'appel en cours et le calcul en temps réel du coût de l'appel en cours en fonction d'un tarif correspondant et de la durée de l'appel en cours.

4. Procédé selon la revendication 1 ou 2, dans lequel le SSP transmet les informations de coût au dispositif terminal en fonction d'une démarche de codage audio.

5. Procédé selon la revendication 4, dans lequel le processus de transmission par le SSP des informations de coût au dispositif terminal comprend en outre : la transmission des informations de coût au dispositif terminal dans un temps de transmission prédéterminé.

6. Procédé selon la revendication 5, dans lequel le temps de transmission prédéterminé est configuré en fonction de la démarche de codage audio et du volume d'informations des informations de coût.

7. Procédé selon la revendication 4, dans lequel la démarche de codage audio comprend : la Modulation par Déplacement de Fréquence FSK ou la Multifréquence en Code 2 DTMF.

8. Réseau intelligent, comprenant :
un Point de Commande de Service, SCP, configuré pour déterminer des informations de coût à transmettre en fonction d'un protocole d'affichage d'informations de coût entre le SCP et un dispositif terminal, le protocole d'affichage d'informations de coût indiquant que les informations de coût comprennent un coût total dans une période de temps; calculer en temps réel un coût d'un appel en cours, et calculer le coût total dans la période de temps en ajoutant le coût de l'appel en cours à un coût total d'appels antérieurs; le coût comprenant une dépense relative à l'appel en cours et le coût total dans la période de temps comprenant une dépense totale dans la période de temps ; et communiquer les informations de coût dans chaque période de facturation ;
un Point de Commutation de Service, SSP, configuré pour transmettre les informations de coût reçues du SCP ; et
le dispositif terminal, configuré pour afficher en temps réel les informations de coût après la réception des informations de coût depuis le SSP.

9. Réseau intelligent selon la revendication 8, dans lequel le SCP est configuré pour communiquer les informations de coût dans chaque période de facturation en élargissant une opération d'interaction conformément à une Procédure d'Application de Réseau Intelligent, INAP, ou en fournissant un protocole privé interne.
